# EUROPEAN PATENT APPLICATION

(11) **EP 4 411 946 A2**
(43) Date of publication of application: **07.08.2024**
(21) Application number: 23212466.9
(22) Date of filing: 27.11.2023
(51) Int. Cl.: H01M 50/209, H01M 50/503, H01M 50/507

(54) **RECHARGEABLE BATTERY PACK**

(30) Priority: 02.02.2023 KR 20230014491
(71) Applicant: Samsung SDI Co., Ltd., Yongin-si, Gyeonggi-do 17084 (KR)
(72) Inventor: MOON, Soodeok, 17084 Yongin-si (KR); JI, Taeho, 17084 Yongin-si (KR); AHN, Soomin, 17084 Yongin-si (KR)
(74) Representative: Marks & Clerk LLP

(57) **Abstract**

A rechargeable battery pack is disclosed. The rechargeable battery pack includes: a plurality of unit battery cells; a case in which an insertion space into which the plurality of unit battery cells are inserted is formed; and a plurality of battery holders that are installed inside the case to electrically connect the plurality of unit battery cells to each other.

## Description

### BACKGROUND

### (a) Field

The present disclosure relates to a rechargeable battery pack.

### (b) Description of the Related Art

A rechargeable battery is a battery that repeatedly performs charging and discharging, unlike a primary battery. A small-capacity rechargeable battery is used in a portable small electronic device such as a mobile phone, a laptop computer, or a camcorder. A large-capacity and high-density rechargeable battery is used as a power source for driving a motor of a hybrid vehicle or an electric vehicle or an energy storage device of the hybrid vehicle or the electric vehicle.

The rechargeable battery includes an electrode assembly for charging and discharging a current, a case for accommodating the electrode assembly and an electrolyte, and an electrode terminal connected to the electrode assembly to draw the electrode assembly out to the outside of the case. The electrode assembly may be formed of a jelly roll type formed by winding an electrode and a separator.

On the one hand, in a conventional rechargeable battery, a plurality of unit battery cells are connected to an electrode terminal by welding in a process of manufacturing a rechargeable battery pack.

However, in a process of welding a battery cell to the electrode terminal, there is a problem in which deterioration damage due to welding heat is generated so that durability is lowered due to heat damage.

### SUMMARY

An embodiment of the present disclosure is to provide a rechargeable battery pack in which deterioration damage due to welding does not occur by connecting an electrode terminal in a form of a cartridge without the welding.

An embodiment of the present disclosure includes: a plurality of unit battery cells, a case in which an insertion space into which the plurality of unit battery cells are inserted is formed; and a plurality of battery holders that are installed inside the case to electrically connect the plurality of unit battery cells to each other.

The plurality of battery holders may be installed inside the case along a first direction to electrically connect the plurality of unit battery cells to each other.

The battery holder may include: a first holder that connects the plurality of unit battery cells to each other in the first direction in the insertion space of the case; and a second holder that connects the plurality of unit battery cells in a second direction orthogonal to the first direction at one side of the case.

The first holder may include: first holder bodies that are installed inside the case in a state in which the first holder bodies are spaced apart from each other at equal intervals and have a plurality of first insertion portions formed in a longitudinal direction; and a plurality of first cell bus bars inserted into the plurality of first insertion portions of the first holder body and to which electrode terminals of the unit battery cells are electrically connected at opposite sides of the first holder body.

The second holder may include: a second holder body installed at one side of an inner wall surface of the case and having a plurality of second insertion portions formed in a length direction; and a second cell bus bar inserted into the second insertion portion to be electrically connected to different electrode terminals of the plurality of unit battery cells.

An elastic protrusion electrically connected to the electrode terminal of the unit battery cell may protrude at a portion of a surface of the first cell bus bar.

An elastic protrusion electrically connected to the electrode terminal of the unit battery cell may protrude at a portion of a surface of the second cell bus bar.

The rechargeable battery pack may further include a first elastic connecting plate protruding at opposite sides of the first cell bus bar to be electrically connected to the electrode terminal of the unit battery cell in a pressurized state.

The first elastic connecting plate may include: a first elastic piece protruding from one side of the cell bus bar; and a second elastic piece protruding from the other side of the cell bus bar.

An elastic protrusion electrically connected to the electrode terminal of the unit battery cell may protrude at a portion of a surface of the first elastic connecting plate.

The second holder may include: the second cell bus bar installed at the one side of the inner wall surface of the case; and a second elastic connecting plate installed at one side of the second cell bus bar to be electrically connected to the different electrode terminals of the plurality of unit battery cells in a pressurized state.

The second elastic connecting plate may include: a first connecting plate electrically connected to an electrode terminal of one unit battery cell of the plurality of unit battery cells; and a second connecting plate electrically connected to an electrode terminal of the other unit battery cell of the plurality of unit battery cells.

The elastic protrusion electrically connected to the electrode terminal of the unit battery cell may protrude at the portion of the surface of the first elastic connecting plate and a portion of a surface of the second elastic connecting plate.

A guide rib that guides a position where the unit battery cell is inserted into the case may protrude on a side surface of the battery holder.

At least one of the first elastic piece and the second elastic piece may be formed with a length shorter than a height of the cell bus bar so that the portion of the surface of the cell bus bar is exposed to the outside.

The first elastic piece and the second elastic piece may be formed with the same length in up and down directions of the opposite sides of the cell bus bar.

Each of the first elastic piece and the second elastic piece may be formed with the length shorter than the height of the cell bus bar so that portions of surfaces of the opposite sides of the cell bus bar are exposed to the outside.

The guide rib may include: a first rib protruding at an exposed portion of the cell bus bar and on one side surface of the cell bus bar; and a second rib protruding at an exposed portion of the cell bus bar and on the other side surface of the cell bus bar.

The first rib and the second rib may protrude at the same height position at the opposite sides of the cell bus bar.

The electrode terminal may include: a first electrode terminal protruding at an eccentric position of one side of the unit battery cell; and a second electrode terminal protruding at an eccentric position of the other side of the unit battery cell. The first electrode terminal and the second electrode terminal may protrude at the same height position on both sides of the unit battery cell.

One of the first elastic piece and the second elastic piece may be formed with a length shorter than a height of the cell bus bar so that the portion of the surface of the cell bus bar is exposed to the outside.

The first elastic piece and the second elastic piece may be formed of different lengths in up and down directions of the opposite sides of the cell bus bar.

One of the first elastic piece and the second elastic piece may be formed with the length shorter than the height of the cell bus bar so that a portion of a surface of one side of the cell bus bar is exposed to the outside.

A single guide rib may protrude at an exposed portion of the cell bus bar and on one side surface of the cell bus bar.

The electrode terminal may include: a first electrode terminal protruding at an eccentric position of one side of the unit battery cell; and a second electrode terminal protruding at a central position of the other side of the unit battery cell. The first electrode terminal and the second electrode terminal may respectively protrude at different height positions on both sides of the unit battery cell.

A connection terminal may protrude in a width direction of the unit battery cell at the battery holder.

The battery holder may include a third holder installed at both sides opposite to inner wall surfaces of the case to electrically connect the plurality of unit battery cells.

The third holder may include: a third holder body installed at opposite sides of the inner wall surfaces of the case and having a plurality of third insertion portions formed therein; and a plurality of third cell bus bars inserted into the plurality of third insertion portions of the third holder body and connected to different electrode terminals of the plurality of unit battery cells.

An elastic protrusion electrically connected to the electrode terminal of the unit battery cell may protrude at a portion of a surface of the third cell bus bar.

An electrical conductivity filler may be applied between the battery holder and the unit battery cell.

The electrical conductivity filler may be a solder or a conductive glue film.

At least some of the above and other features of the invention are set out in the claims.

According to the embodiment of the present disclosure, since a plurality of unit battery cells are electrically connected to each other in a form of a cartridge in a non-welding state by a plurality of first holders and a second holder, it is possible to improve durability by preventing deterioration damage caused by welding in a process of connecting electrode terminals.

### BRIEF DESCRIPTION OF THE DRAWINGS

FIG. 1 is a perspective view schematically showing a rechargeable battery pack according to a first embodiment of the present disclosure.
FIG. 2 is a perspective view schematically showing a state in which a unit battery cell (or a single battery cell) of the rechargeable battery pack of FIG. 1 is removed.
FIG. 3 is a perspective view schematically showing a first holder according to the first embodiment of the present disclosure.
FIG. 4 is a perspective view schematically showing a first cell bus bar inserted into a first holder body constituting the first holder of FIG. 3.
FIG. 5 is a perspective view schematically showing a second holder according to the first embodiment of the present disclosure.
FIG. 6 is a perspective view schematically showing a second cell bus bar inserted into a second holder body constituting the second holder of FIG. 5.
FIG. 7 is a plane view of a main portion schematically illustrating a state in which a plurality of unit battery cells of the rechargeable battery pack according to the first embodiment of the present disclosure are connected in series by a battery holder.
FIG. 8 is a plane view of a main portion schematically showing a state in which a plurality of unit battery cells of a rechargeable battery pack according to a second embodiment of the present disclosure are connected in parallel by a battery holder.
FIG. 9 is a view of a main portion schematically showing a state in which a first elastic connecting plate protrudes at a first holder of a battery holder of a rechargeable battery pack according to a third embodiment of the present disclosure.
FIG. 10 is a side view schematically showing a state in which the first elastic connecting plate protrudes at a side surface of the first holder of FIG. 9.
FIG. 11 is a side view of a main portion schematically illustrating a state in which a unit battery cell (or a single battery cell) is inserted between a plurality of first holders according to the third embodiment of the present disclosure.
FIG. 12 is a side view of a main portion schematically showing a state in which the unit battery cell of FIG. 11 is inserted between the plurality of first holders.
FIG. 13 is a view of a main portion schematically showing a state in which a second elastic connecting plate protrudes at a second holder of the battery holder of the rechargeable battery pack according to the third embodiment of the present disclosure.
FIG. 14 is a side view schematically showing a state in which the second elastic connecting plate protrudes at a side surface of the second holder of FIG. 13.
FIG. 15 is a side view of a main portion schematically illustrating a state in which a guide rib protrudes at a battery holder of a rechargeable battery pack according to a fourth embodiment of the present disclosure.
FIG. 16 is a side view of a main portion schematically illustrating a state in which a guide rib protrudes at a battery holder of a rechargeable battery pack according to a fifth embodiment of the present disclosure.
FIG. 17 is a view of a main portion schematically showing a state in which an electrical conductivity filler is applied between a battery holder and an electrode terminal according to a sixth embodiment of the present disclosure.
FIG. 18 is a perspective view schematically showing a rechargeable battery pack according to the sixth embodiment of the present disclosure.
FIG. 19 is a perspective view schematically showing a state in which a unit battery cell is removed from the rechargeable battery pack of FIG. 18.

### DETAILED DESCRIPTION OF THE EMBODIMENTS

The present disclosure will be described more fully hereinafter with reference to the accompanying drawings, in which embodiments of the disclosure are shown. As those skilled in the art would realize, the described embodiments may be modified in various different ways, all without departing from the scope of the present disclosure. The drawings and description are to be regarded as illustrative in nature and not restrictive. Like reference numerals designate like elements throughout the specification.

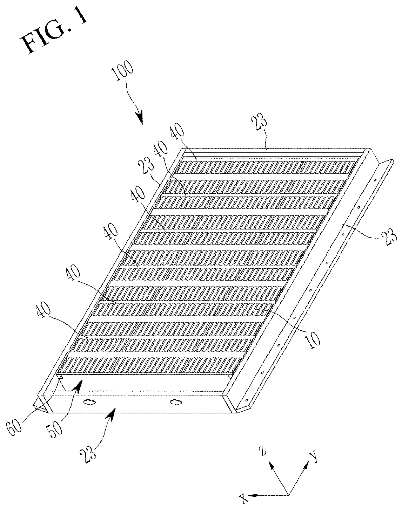

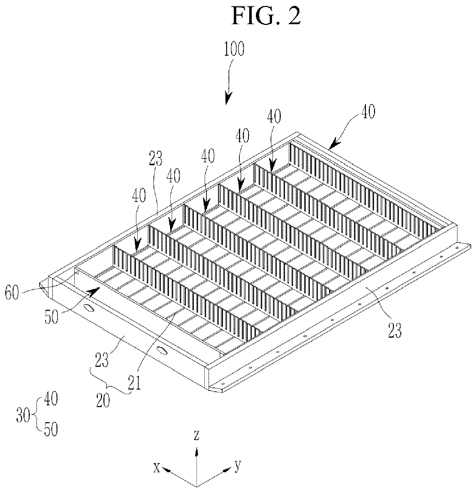

FIG. 1 is a perspective view schematically showing a rechargeable battery pack according to a first embodiment of the present disclosure, and FIG. 2 is a perspective view schematically showing a state in which a unit battery cell (or a single battery cell) of the rechargeable battery pack of FIG. 1 is removed.

As shown in FIGS. 1 and 2, the rechargeable battery pack 100 according to the first embodiment of the present disclosure includes a plurality of unit battery cells 10, a case 20 having an insertion space into which the plurality of unit battery cells 10 are inserted, and a plurality of battery holders 30 installed inside the case 20 to electrically connect the plurality of unit battery cells 10 to each other.

The unit battery cell 10 may be a battery having a prismatic cross-section, and may include a conventional rechargeable battery that repeatedly performs charging and discharging actions. The unit battery cells 10 may form a plurality of rows and columns inside the case 20 to be inserted into the battery holder 30 so that the unit battery cells 10 are supported by the battery holder 30.

The case 20 may include a bottom plate 21 supporting the unit battery cell 10 and a side surface portion 23 installed at an edge of the bottom plate 21 to support the unit battery cell 10.

The side surface portion 23 may be integrally combined with the bottom plate 21, or the side surface portion 23 may be detachably combined with the bottom plate 21 by a bolt fastening method, a method in which a protrusion is inserted into a groove, or the like.

The case 20 may be installed to form the insertion space with a rectangular parallelepiped into which the plurality of unit battery cells 10 are inserted.

The plurality of unit battery cells 10 may be installed in a state in which the plurality of unit battery cells 10 are electrically connected to each other by the battery holder 30 in a state in which the plurality of unit battery cells 10 is inserted inside the case 20.

The plurality of battery holders 30 may be installed along a first direction inside the case 20 to electrically connect the plurality of unit battery cells 10 to each other.

More specifically, the battery holder 30 may include a first holder 40 connecting the plurality of unit battery cells 10 to each other in a first direction (a y-axis direction) in the insertion space of the case 20 and a second holder 50 connecting the plurality of unit battery cells 10 in a second direction (an x-axis direction) orthogonal to the first direction (the y-axis direction) at one side of the case 20.

Here, the first direction (the y-axis direction) may be a transverse direction in which a plurality of first holders 40 are disposed. In addition, the second direction (the x-axis direction) may be a direction orthogonal to the first direction (the y-axis direction), and may be a longitudinal direction in which the plurality of unit battery cells 10 are electrically connected.

The plurality of first holders 40 may be installed within the case 20 in a state in which the plurality of first holders 40 are spaced apart from each other at equal intervals in the first direction (the y-axis direction) to electrically connect the plurality of unit battery cells 10 to each other.

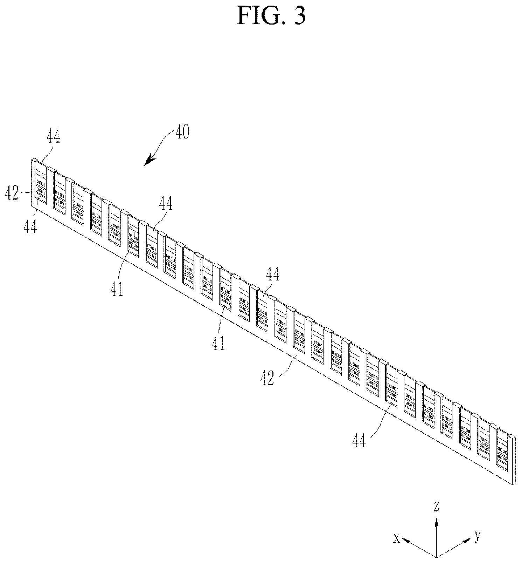

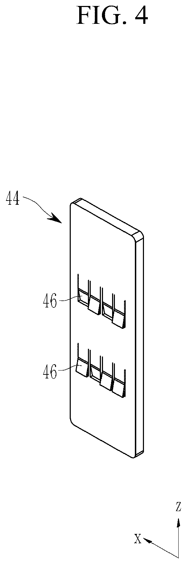

FIG. 3 is a perspective view schematically showing the first holder according to the first embodiment of the present disclosure, and FIG. 4 is a perspective view schematically showing a first cell bus bar inserted into a first holder body constituting the first holder of FIG. 3.

More specifically, referring to FIGS. 3 and 4, the first holder 40 may include first holder bodies 42 installed inside the case 20 in a state in which the first holder bodies 42 are spaced apart from each other at equal intervals and having a plurality of first insertion portions 41 formed in the second direction (the x-axis direction) for example the longitudinal direction, and a plurality of first cell bus bars 44 inserted into the plurality of first insertion portions 41 of the first holder body 42 and to which electrode terminals of the unit battery cells 10 are electrically connected at opposite sides of the first holder body 42.

The first holder bodies 42 may be installed within the case 20 along the first direction (the y-axis direction) at equal intervals between each other, and the first holder body 42 may be formed in a long length in the second direction (the x-axis direction) orthogonal to the first direction.

In the first holder body 42, the plurality of first insertion portions 41 may be formed in a state of being spaced apart from each other along a length direction.

The first insertion portion 41 may be formed to penetrate the first holder body 42, and the first cell bus bar 44 may be inserted in the first insertion portion 41. Therefore, the electrode terminal may be inserted into the first insertion portion 41 to be electrically connected to the first cell bus bar 44.

The first cell bus bar 44 may electrically connect the plurality of unit battery cells 10 to each other at opposite sides of the first cell bus bar 44 in a state in which the first cell bus bar 44 is inserted into the first insertion portion 41.

Elastic protrusions 46 may protrude on a surface of the first cell bus bar 44.

Therefore, since the electrode terminal of the unit battery cell 10 is stably in close contact with the elastic protrusion 46, it is possible to improve durability of electrical connection.

As described above, the plurality of unit battery cells 10 may be electrically connected along the first direction (the y-axis direction) by the first holder 40. In addition, the plurality of unit battery cells 10 may be electrically connected to each other by the second holder 50 at one side of an inner wall surface of the case 20.

The second holder 50 may be installed to electrically connect one sides of the plurality of unit battery cells 10 electrically connected in the first direction (the y-axis direction) by the first holder 40 to each other in the second direction (the x-axis direction).

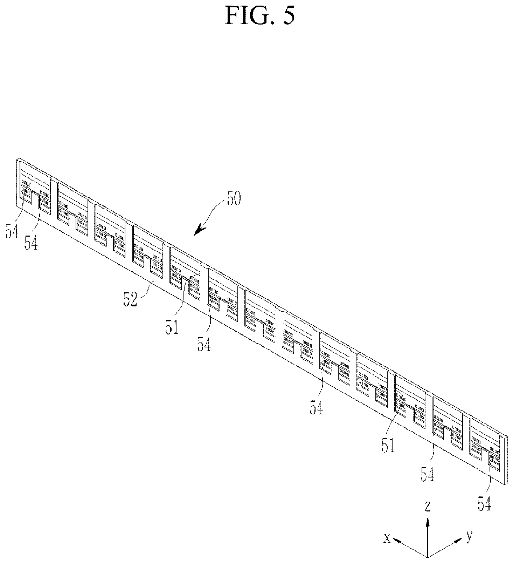

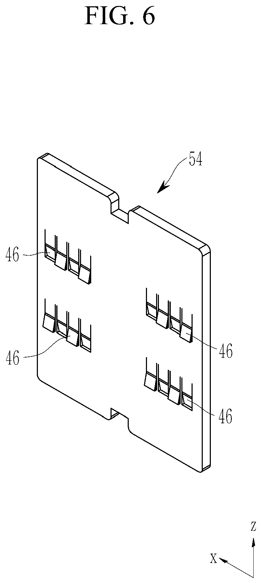

FIG. 5 is a perspective view schematically showing the second holder according to the first embodiment of the present disclosure, and FIG. 6 is a perspective view schematically showing a second cell bus bar inserted into a second holder body constituting the second holder of FIG. 5.

More specifically, referring to FIGS. 5 and 6, the second holder 50 may include the second holder body 52 installed at one side of the inner wall surface of the case 20 and having a plurality of second insertion portions 51 formed in a length direction, and the second cell bus bar 54 inserted into the second insertion portion 51 to be electrically connected to different electrode terminals of the plurality of unit battery cells 10.

The second holder body 52 may be installed at the one side of the inner wall surface of the case 20, and the plurality of second insertion portions 51 may be formed spaced apart from each other in a length direction.

The second insertion portion 51 may be formed in a shape of a groove at the second holder body 52, and the second cell bus bar 54 may be inserted in the second insertion portion 51. For example, the electrode terminal may be inserted into the second insertion portion 51 to be electrically connected to the second cell bus bar 54.

The second cell bus bar 54 may be inserted into the second insertion portion 51 to electrically connect electrode terminals formed on one sides of a pair of unit battery cells 10 to each other.

A plurality of elastic protrusions 46 may protrude on a surface of the second cell bus bar 54. Therefore, the electrode terminals 11 and 13 may be in close contact with the plurality of elasticity protrusions 46 to enable more stable electrical connection.

On the other hand, it is also possible that a connection terminal 60 protrudes in a width direction of the unit battery cell 10 in the battery holder 30.

The connection terminal 60 may protrude on a side surface of the battery holder 30 to be electrically connected to any one of the plurality of unit battery cells 10 connected by the battery holder 30.

The connection terminal 60 may protrude at any one of the first holder 40 and the second holder 50 constituting the battery holder 30, and may be electrically connected to an outermost cell of the plurality of unit battery cells 10.

As described above, in the rechargeable battery pack 100 according to the first embodiment of the present disclosure, since the plurality of unit battery cells 10 are electrically connected to each other in a form of a cartridge in a non-welding state by the plurality of first holders 40 and the second holder 50, it is possible to improve durability by preventing deterioration damage caused by welding in a process of connecting the electrode terminals.

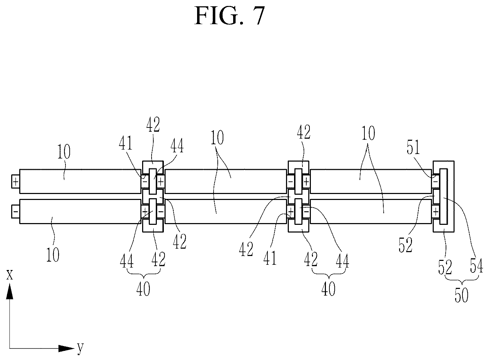

FIG. 7 is a plane view of a main portion schematically illustrating a state in which the plurality of unit battery cells of the rechargeable battery pack according to the first embodiment of the present disclosure are connected in series by the battery holder.

As shown in FIG. 7, the plurality of unit battery cells 10 may be connected in series with different polarities in the first direction by the first holder 40.

In addition, the plurality of unit battery cells 10 connected in series may be electrically connected in the second direction by the second holder 50.

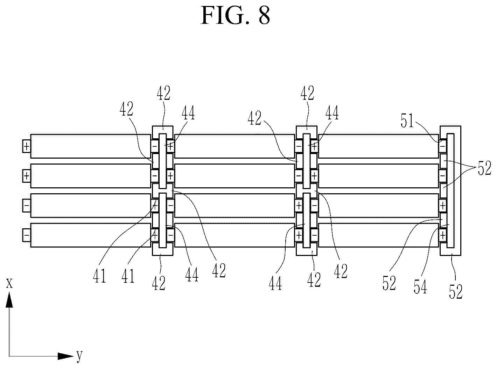

FIG. 8 is a plane view of a main portion schematically showing a state in which a plurality of unit battery cells of a rechargeable battery pack according to a second embodiment of the present disclosure are connected in parallel by a battery holder.

As shown in FIG. 8, electrode terminals of the same polarity of a pair of unit battery cells 10 may be electrically connected to the first holder 40 to be connected in parallel.

Here, a single first cell bus bar 44 may be inserted into two first insertion portions 41 to be connected to electrode terminals of two unit battery cells 10.

In addition, the plurality of unit battery cells 10 connected in parallel may be electrically connected in the second direction by the second holder 50. Here, a single second cell bus bar 54 may be inserted into two second insertion portions 51 to be connected to electrode terminals of four unit battery cells 10.

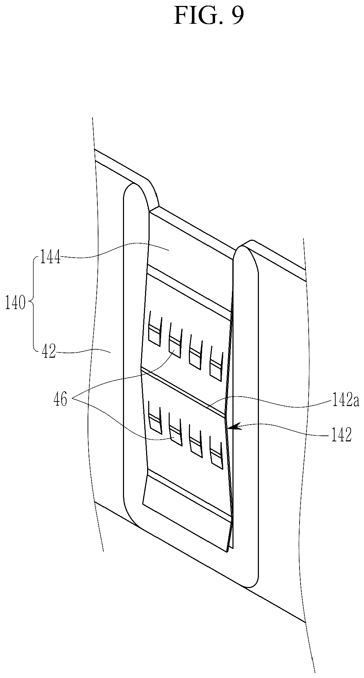

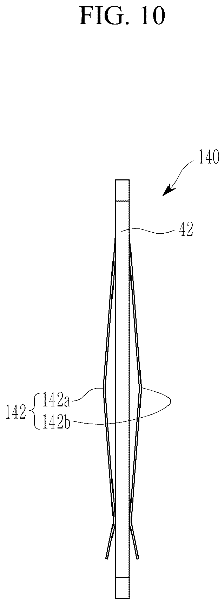

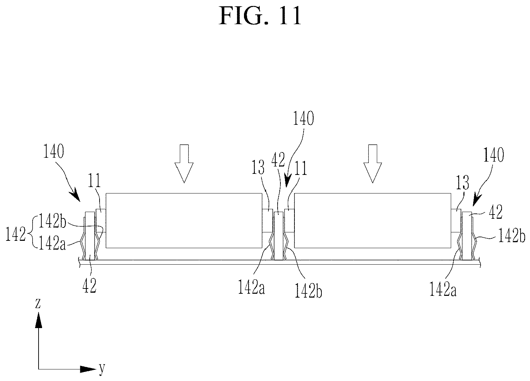

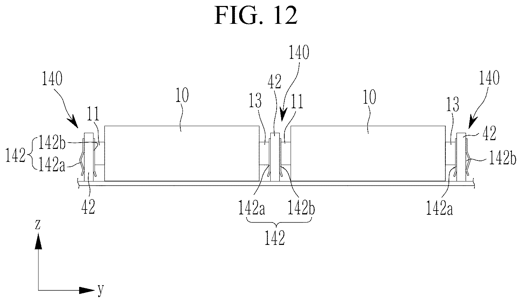

FIG. 9 is a view of a main portion schematically showing a state in which a first elastic connecting plate protrudes at a first holder of a battery holder of a rechargeable battery pack according to a third embodiment of the present disclosure, FIG. 10 is a side view schematically showing a state in which the first elastic connecting plate protrudes at a side surface of the first holder of FIG. 9, FIG. 11 is a side view of a main portion schematically illustrating a state in which a unit battery cell (or a single battery cell) is inserted between a plurality of first holders according to the third embodiment of the present disclosure, and FIG. 12 is a side view of a main portion schematically showing a state in which the unit battery cell of FIG. 11 is inserted between the plurality of first holders. In the following description, the same reference numeral as that in FIGS. 1 to 8 denotes the same or similar member having the same or similar function. Hereinafter, detailed description of the same reference numeral is omitted.

As shown in FIGS. 9 to 12, a first holder 140 of the rechargeable battery pack according to the third embodiment of the present disclosure may include the first holder body 42 and a first cell busbar 144 inserted into the first holder body 42. The first elastic connecting plate 142 electrically connected to the electrode terminal of the unit battery cell 10 in a pressurized state may protrude at opposite sides of a first cell bus bar 144.

Since the first elastic connecting plate 142 is installed in a bent state at the opposite sides of the first cell bus bar 144, the first elastic connecting plate 142 contacts the electrode terminals of the unit battery cells 10 in a pressurized state so that more stable electrical connection is possible.

More specifically, the first elastic connecting plate 142 may include a first elastic piece 142a protruding from one side of the first cell bus bar 144 and a second elastic piece 142b protruding from the other side of the first cell bus bar 144.

The first elastic piece 142a may be formed of a metal material that has an elastic force and is electrically connected to the electrode terminal of the unit battery cell 10, and may protrude in a bent state at one side of the first cell bus bar 144.

If the first elastic piece 142a is in contact with the electrode terminals 11 and 13 of the unit battery cell 10, the first elastic piece 142a may be in close contact with the electrode terminals 11 and 13 by elastic deformation.

The elastic protrusion 46 may protrude at a portion where the first elastic piece 142a and the electrode terminal of the unit battery cell 10 contact each other.

The elasticity protrusion 46 may protrude on a surface of the first elastic piece 142a, and the plurality of elastic protrusions 46 may protrude at a portion where the first elastic piece 142a and the electrode terminal of the unit battery cell 10 contact each other.

Therefore, since the electrode terminals 11 and 13 of the unit battery cell 10 are stably in close contact with the elastic protrusion 46, it is possible to improve durability of electrical connection.

The second elastic piece 142b may be formed of a metal material that has an elastic force and is electrically connected to the electrode terminal of the unit battery cell 10, and may protrude in a bent state at the other side of the first cell bus bar 144.

For example, the second elastic piece 142b may protrude in a bent state at a position opposite to a position where the first elastic piece 142a is installed with the first cell bus bar 144 interposed between the second elastic piece 142b and the first elastic piece 142a.

Therefore, if the second elastic piece 142b is in contact with the electrode terminals 11 and 13 of the unit battery cell 10, the second elastic piece 142b may be in close contact with the electrode terminals 11 and 13 by elastic deformation.

The elastic protrusion 46 may protrude at a portion where the second elastic piece 142b and the electrode terminal of the unit battery cell 10 contact each other.

The elasticity protrusion 46 may protrude on a surface of the second elastic piece 142b, and the plurality of elastic protrusions 46 may protrude at a portion where the second elastic piece 142b and the electrode terminal of the unit battery cell 10 contact each other.

For example, since the first elastic piece 142a and the second elastic piece 142b of the third embodiment have the same size and the same shape and protrude in a bent state at both sides of the first cell bus bar 144, the plurality of unit battery cells 10 may be electrically connected to each other.

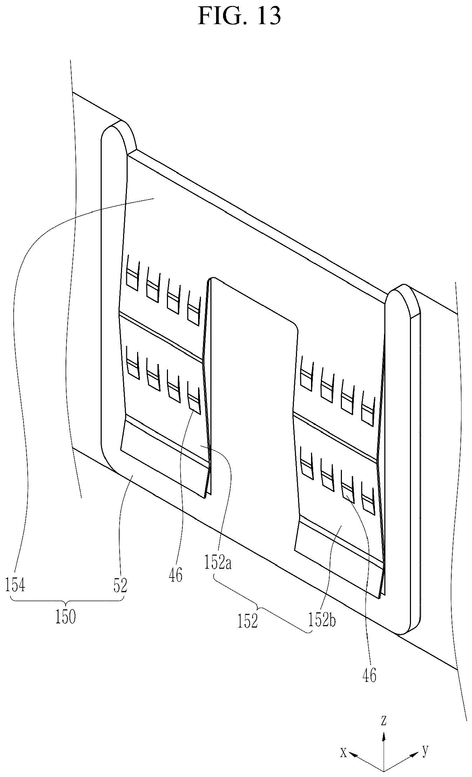

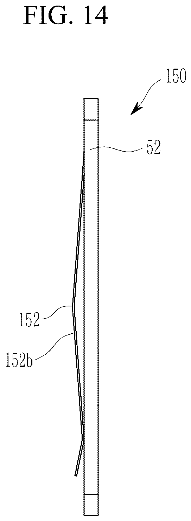

FIG. 13 is a view of a main portion schematically showing a state in which a second elastic connecting plate protrudes at a second holder of the battery holder of the rechargeable battery pack according to the third embodiment of the present disclosure, and FIG. 14 is a side view schematically showing a state in which the second elastic connecting plate protrudes at a side surface of the second holder of FIG. 13. In the following description, the same reference numeral as that in FIGS. 1 to 12 denotes the same or similar member having the same or similar function. Hereinafter, detailed description of the same reference numeral is omitted.

As shown in FIGS. 13 and 14, a second holder 150 may include the second holder body 52 and a second cell bus bar 154 inserted into the second holder body 52. The second elastic connecting plate 152 may protrude at the second cell bus bar 154.

The second elastic connecting plate 152 may be installed at one side of the second cell bus bar 154 to be electrically connected to the different electrode terminals of the plurality of unit battery cells 10 in a pressurized state so that the plurality of unit battery cells 10 are connected in the second direction (the x-axis direction).

The second elastic connecting plate 152 may include a first connecting plate 152a electrically connected to an electrode terminal of one unit battery cell of the plurality of unit battery cells 10, and a second connecting plate 152b electrically connected to an electrode terminal of the other unit battery cell of the plurality of unit battery cells 10.

The first connecting plate 152a may be formed at one side of the second elastic connecting plate 152, and may be electrically connected to one electrode terminal of a pair of unit battery cells 10 to be electrically connected to each other.

The second connecting plate 152b may be formed at the other side of the second elastic connecting plate 152, and may be electrically connected to the other electrode terminal of the pair of unit battery cells 10 to be electrically connected to each other.

For example, the first connecting plate 152a and the second connecting plate 152b may be formed adjacent to the second cell bus bar 154 so as to connect electrode terminals of different polarities of the pair of unit battery cells 10 to each other in the second direction (the x-axis direction).

The elastic protrusion 46 may protrude at each of the first connecting plate 152a and the second connecting plate 152b.

For example, the plurality of elastic protrusions 46 may protrude from surfaces of the first connecting plate 152a and the second connecting plate 152b, and may protrude so that the electrode terminal of the unit battery cell 10 is more easily electrically connected.

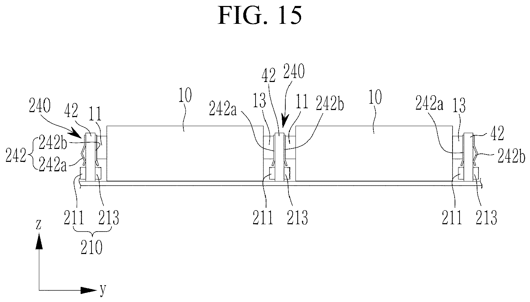

FIG. 15 is a side view of a main portion schematically illustrating a state in which a guide rib protrudes at a battery holder of a rechargeable battery pack according to a fourth embodiment of the present disclosure. In the following description, the same reference numeral as that in FIGS. 1 to 14 denotes the same or similar member having the same or similar function. Hereinafter, detailed description of the same reference numeral is omitted.

As shown in FIG. 15, the guide rib 210 may protrude on a side surface of a first holder 240 constituting the battery holder of the rechargeable battery pack according to the fourth embodiment of the present disclosure.

The guide rib 210 may prevent an insertion error from occurring in a process of inserting and fixing the plurality of unit battery cells 10 into the first holder 240, and may protrude on the side surface of the first holder 240.

The guide rib 210 may include a first rib 211 protruding at one side of the first cell bus bar 44 and a second rib 213 protruding at the other side of the first cell bus bar 44.

The first rib 211 may protrude at the one side of the first cell bus bar 44, and may protrude to prevent an insertion error of the unit battery cell 10 inserted from the one side of the first cell bus bar 44 from occurring.

The second rib 213 may protrude to the other side of the first cell bus bar 44, and may protrude to prevent an insertion error of the unit battery cell 10 inserted from the other side of the first cell bus bar 44 from occurring.

The first rib 211 and the second rib 213 may protrude at a lower position of the first cell bus bar 44, and may protrude on a side surface of the first cell bus bar 44 without contacting the first elastic piece 242a and the second elastic piece 242b.

To this end, one side of each of the first elastic piece 242a and the second elastic piece 242b may be connected to an upper side of the first cell bus bar 44 and the other side of each of the first elastic piece 242a and the second elastic piece 242b may extend to a lower portion of the first cell bus bar 44 so that a portion of the side surface of the first cell bus bar 44 is exposed to the outside.

An elastic piece 242 may include the first elastic piece 242a protruding at both sides of the first holder body 42 and the second elastic piece 242b.

For example, the first elastic piece 242a and the second elastic piece 242b may be formed with the same length in up and down directions of opposite sides of the first cell bus bar 44, and may be formed with a length shorter than a height of the first cell bus bar 44. Thus, a portion of a surface of the first cell bus bar 44 may be exposed to the outside so that the guide rib 210 protrudes.

Therefore, since each of the first rib 211 and the second rib 213 protrudes at an exposed portion of the first cell bus bar 44 where the first elastic piece 142a and the second elastic piece 142b are not disposed, an insertion position of the unit battery cell 10 may be guided.

For example, since the electrode terminals 11 and 13 of the unit battery cell 10 of the fourth embodiment may protrude at an upper eccentric position with respect to a center of the unit battery cell 10, the electrode terminals 11 and 13 may interfere with the first rib 211 or the second rib 213 if an error occurs in inserting the unit battery cell 10 into the battery holder 30.

Therefore, the unit battery cell 10 may be inserted in a correct position between first holders 240 of the battery holder by an insertion guide action of the guide rib 210 so that the insertion error of the unit battery cell 10 is prevented from occurring.

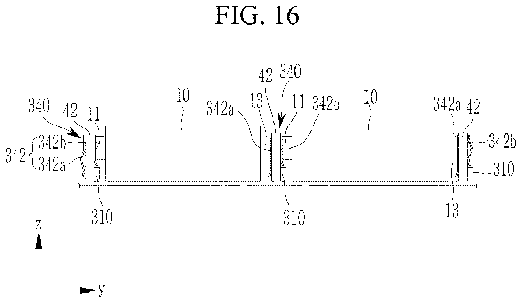

FIG. 16 is a side view of a main portion schematically illustrating a state in which a guide rib protrudes at a battery holder of a rechargeable battery pack according to a fifth embodiment of the present disclosure. In the following description, the same reference numeral as that in FIGS. 1 to 15 denotes the same or similar member having the same or similar function. Hereinafter, detailed description of the same reference numeral is omitted.

As shown in FIG. 16, in a first holder 340 constituting the battery holder of the rechargeable battery pack according to the fifth embodiment of the present disclosure, a single guide rib 310 may protrude on one side surface of the first cell bus bar 44.

To this end, an elastic piece 342 may include a first elastic piece 342a and a second elastic piece 342b.

One of the first elastic piece 342a and the second elastic piece 342b may be formed with a length shorter than a height of the first cell bus bar 44 so that a portion of a surface of one side of the first cell bus bar 44 is exposed to the outside.

For example, the single guide rib 310 may protrude at an exposed portion of the first cell bus bar 44 where the elastic piece is not disposed on the one side surface of the first cell bus bar 44.

The electrode terminal of the unit battery cell 10 of the fifth embodiment may include the first electrode terminal 11 protruding at an eccentric position of one side of the unit battery cell, and the second electrode terminal 13 protruding at a central position of the other side of the unit battery cell. The first electrode terminal 11 and the second electrode terminal 13 may respectively protrude at different height positions at both sides of the unit battery cell 10.

Therefore, in a process of inserting the unit battery cell 10 of the fifth embodiment between the battery holders 30, the unit battery cell 10 electrically connected to the elastic piece may be inserted in a correct position in a state in which the first electrode terminal 11 is disposed at an upper side of the guide rib 310.

For example, if an error occurs if the unit battery cell 10 of the fifth embodiment is inserted between first holders 340, the first electrode terminal 11 may interfere with the first elastic piece 342a so that the insertion error is prevented from occurring.

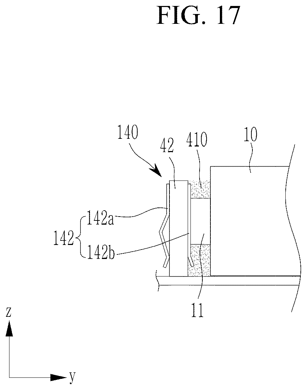

FIG. 17 is a view of a main portion schematically showing a state in which an electrical conductivity filler is applied between a battery holder and an electrode terminal according to a sixth embodiment of the present disclosure. In the following description, the same reference numeral as that in FIGS. 1 to 16 denotes the same or similar member having the same or similar function. Hereinafter, detailed description of the same reference numeral is omitted.

As shown in FIG. 17, in the rechargeable battery pack 100 according to the sixth embodiment of the present disclosure, the electrical conductivity filler 410 may be applied between the battery holder and the electrode terminal 11 or 13. The present embodiment illustrates that the electrical conductivity filler 410 is applied between the first holder body 42 of the first holder 140 and the electrode terminal, but the electrical conductivity filler may be further applied between the second holder 50 and the electrode terminal.

The electrical conductivity filler 410 may be filled between the electrode terminal 11 or 13 of the unit battery cell 10 and the first elastic connecting plate 142 of the battery holder 30, and may reduce a contact resistance between the electrode terminal 11 or 13 and the unit battery cell 10.

The electrical conductivity filler 410 may be applied in a form of a paste between the electrode terminal and the unit battery cell, and may be a solder or a conductive glue film (or a conductive adhesive film) in the present embodiment.

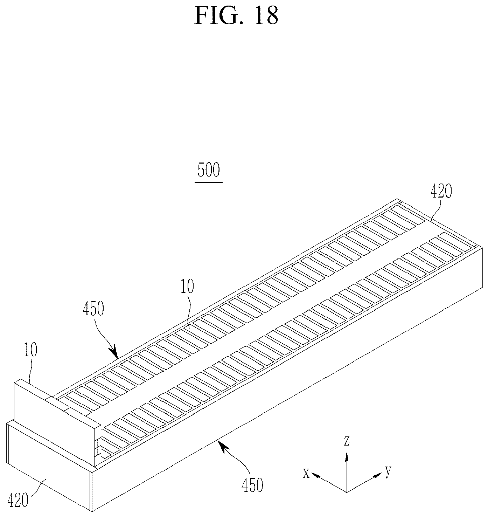

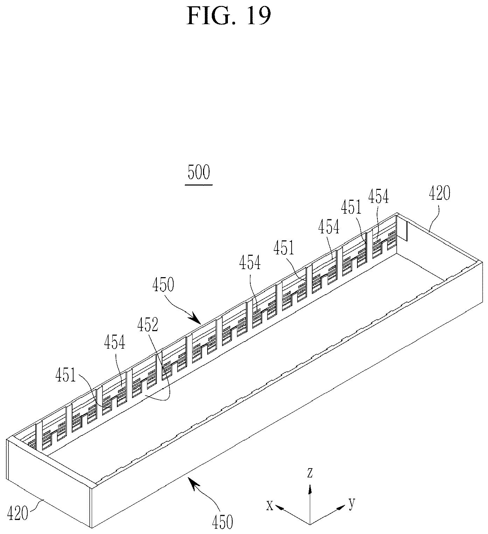

FIG. 18 is a perspective view schematically showing a rechargeable battery pack according to the sixth embodiment of the present disclosure, and FIG. 19 is a perspective view schematically showing a state in which a unit battery cell is removed from the rechargeable battery pack of FIG. 18. In the following description, the same reference numeral as that in FIGS. 1 to 17 denotes the same or similar member having the same or similar function. Hereinafter, detailed description of the same reference numeral is omitted.

As shown in FIGS. 18 and 19, a battery holder 450 of a rechargeable battery pack 500 according to the sixth embodiment of the present disclosure may include a third holder installed at both sides opposite to inner wall surfaces of a case 420 to electrically connect the plurality of unit battery cells. Hereinafter, the battery holder and the third holder use the same reference number.

The third holder 450 may include a third holder body 452 installed at opposite sides of the inner wall surfaces of the case 420 and having a plurality of third insertion portions 451 formed therein, and a plurality of third cell bus bars 454 inserted into the plurality of third insertion portions 451 of the third holder body 452 and connected to the electrode terminal of the unit battery cell 10.

The third holder body 452 of the sixth embodiment may be installed at the opposite sides of the case 420, and may have the plurality of third insertion portions 451 formed along a length direction.

The plurality of third cell bus bars 454 may be installed in the plurality of third insertion portions 451 to electrically connect the plurality of unit battery cells 10 to each other.

The elastic protrusion 46 electrically connected to the electrode terminal of the unit battery cell 10 may protrude from a surface of the third cell bus bar 454.

While this disclosure has been described in connection with what is presently considered to be practical embodiments, it is to be understood that the disclosure is not limited to the disclosed embodiments, but, on the contrary, is intended to cover various modifications and equivalent arrangements included within the scope of the appended claims.

### <Description of symbols>

10: unit battery cell 11, 13: electrode terminal
20, 420: case
21: bottom plate 23: side surface portion
30: battery holder 40, 140, 240, 340: first holder
41: first insertion portion 42: first holder body
44, 144: first cell bus bar 50, 150: second holder
46: elastic protrusions
51: second insertion portion
54, 154: second cell bus bar 60: connection terminal
100: rechargeable battery pack
142: first elastic connecting plate 142a, 242a, 342a: first elastic piece
142b, 242b, 342b: second elastic piece 152: second elastic connecting plate
152a: first connecting plate 152b: second connecting plate
210: guide rib 211: first rib
213: second rib 242, 342: elastic piece
410: electrical conductivity filler
450: battery holder, third holder 451: third insertion portion
452: third holder body 454: third cell bus bar

## Claims

1. A rechargeable battery pack, comprising:
a plurality of unit battery cells;
a case in which an insertion space into which the plurality of unit battery cells are inserted is formed; and
a plurality of battery holders that are installed inside the case to electrically connect the plurality of unit battery cells to each other.

2. The rechargeable battery pack as claimed in claim 1, wherein the plurality of battery holders are installed inside the case along a first direction to electrically connect the plurality of unit battery cells to each other.

3. The rechargeable battery pack as claimed in claim 2, wherein the battery holder comprises:
a first holder that connects the plurality of unit battery cells to each other in the first direction in the insertion space of the case; and
a second holder that connects the plurality of unit battery cells in a second direction orthogonal to the first direction at one side of the case.

4. The rechargeable battery pack as claimed in claim 3, wherein the first holder comprises:
first holder bodies that are installed inside the case in a state in which the first holder bodies are spaced apart from each other at equal intervals and have a plurality of first insertion portions formed in a longitudinal direction; and
a plurality of first cell bus bars inserted into the plurality of first insertion portions of the first holder body and to which electrode terminals of the unit battery cells are electrically connected at opposite sides of the first holder body.

5. The rechargeable battery pack as claimed in claim 4, wherein the second holder comprises:
a second holder body installed at one side of an inner wall surface of the case and having a plurality of second insertion portions formed in a length direction; and
a second cell bus bar inserted into the second insertion portion to be electrically connected to different electrode terminals of the plurality of unit battery cells.

6. The rechargeable battery pack as claimed in claim 5, wherein an elastic protrusion electrically connected to the electrode terminal of the unit battery cell protrudes at a portion of a surface of the first cell bus bar.

7. The rechargeable battery pack as claimed in claim 6, wherein an elastic protrusion electrically connected to the electrode terminal of the unit battery cell protrudes at a portion of a surface of the second cell bus bar.

8. The rechargeable battery pack as claimed in claim 7, further comprising a first elastic connecting plate protruding at opposite sides of the first cell bus bar to be electrically connected to the electrode terminal of the unit battery cell in a pressurized state.

9. The rechargeable battery pack as claimed in claim 8, wherein the first elastic connecting plate comprises:
a first elastic piece protruding from one side of the cell bus bar; and
a second elastic piece protruding from the other side of the cell bus bar.

10. The rechargeable battery pack as claimed in claim 9, wherein an elastic protrusion electrically connected to the electrode terminal of the unit battery cell protrudes at a portion of a surface of the first elastic connecting plate.

11. The rechargeable battery pack as claimed in claim 10, wherein the second holder comprises:
the second cell bus bar installed at the one side of the inner wall surface of the case; and
a second elastic connecting plate installed at one side of the second cell bus bar to be electrically connected to the different electrode terminals of the plurality of unit battery cells in a pressurized state.

12. The rechargeable battery pack as claimed in claim 11, wherein the second elastic connecting plate comprises:
a first connecting plate electrically connected to an electrode terminal of one unit battery cell of the plurality of unit battery cells; and
a second connecting plate electrically connected to an electrode terminal of the other unit battery cell of the plurality of unit battery cells.

13. The rechargeable battery pack as claimed in claim 12, wherein the elastic protrusion electrically connected to the electrode terminal of the unit battery cell protrudes at the portion of the surface of the first elastic connecting plate and a portion of a surface of the second elastic connecting plate.

14. The rechargeable battery pack as claimed in claim 13, wherein a guide rib that guides a position where the unit battery cell is inserted into the case protrudes on a side surface of the battery holder.

15. The rechargeable battery pack as claimed in claim 14, wherein at least one of the first elastic piece and the second elastic piece is formed with a length shorter than a height of the cell bus bar so that the portion of the surface of the cell bus bar is exposed to the outside.

16. The rechargeable battery pack as claimed in claim 15, wherein the first elastic piece and the second elastic piece are formed with the same length in up and down directions of the opposite sides of the cell bus bar.

17. The rechargeable battery pack as claimed in claim 16, wherein each of the first elastic piece and the second elastic piece is formed with the length shorter than the height of the cell bus bar so that portions of surfaces of the opposite sides of the cell bus bar are exposed to the outside.

18. The rechargeable battery pack as claimed in claim 17, wherein the guide rib comprises:
a first rib protruding at an exposed portion of the cell bus bar and on one side surface of the cell bus bar; and
a second rib protruding at an exposed portion of the cell bus bar and on the other side surface of the cell bus bar.

19. The rechargeable battery pack as claimed in claim 18, wherein the first rib and the second rib protrude at the same height position at the opposite sides of the cell bus bar, optionally wherein the electrode terminal comprises:
a first electrode terminal protruding at an eccentric position of one side of the unit battery cell; and
a second electrode terminal protruding at an eccentric position of the other side of the unit battery cell,
wherein the first electrode terminal and the second electrode terminal protrude at the same height position on both sides of the unit battery cell.

20. The rechargeable battery pack as claimed in claim 14, wherein one of the first elastic piece and the second elastic piece is formed with a length shorter than a height of the cell bus bar so that the portion of the surface of the cell bus bar is exposed to the outside.
